# EUROPEAN PATENT APPLICATION

(11) **EP 0 647 858 A1**
(43) Date of publication of application: **12.04.1995**
(21) Application number: 94307438.5
(22) Date of filing: 11.10.1994
(51) Int. Cl.: G01T 1/20, G01N 21/76

(54) **Method and device for counting scintillation light pulses**

(30) Priority: 11.10.1993 FI 934455
(71) Applicant: WALLAC OY, SF-20101 Turku (FI)
(72) Inventor: Harju, Raimo, SF-20540 Turku (FI)
(74) Representative: Gallafent, Richard John

(57) **Abstract**

A method for counting the number and measuring the intensity of light pulses produced in a scintillator by the chemiluminescence labels or radioisotopes used in biochemical applications in plane-like samples (13) so that in addition to the intensity of the light pulses, also the position of each light pulse is determined. An image detector (20) is used in measuring so that the light-sensitive surface of the image detector and the sample (13) are brought as close to each other as possible.

## Description

The object of the present invention is a method for counting the number and measuring the intensity of light pulses produced by the chemiluminescence labels or radioisotopes used in biochemical applications in a scintillator, in plane-like samples.

### BACKGROUND OF THE INVENTION

In many biochemical methods of determination and analysis, the position and number of various proteins or other molecules on a plane-like base is measured. Typical examples of such methods are electrophoresis, and thin-plate and paper chromatography. More recent methods are, for example, hybridisations carried out on nylon films and various kinds of cell separation methods carried out on filter material. The latter method differs from the former in that in this method the positions of the samples on the filter film are known in advance, and these positions are usually arranged in some kind of regular order. In electrophoresis and the chromatographic methods, on the other hand, the position of molecules with respect to other molecules differing in some respect is significant.

As detecting a single molecule, or even a few larger molecules, as such on a given surface is difficult, in biochemistry the substances examined must be labelled with a label or tracer to facilitate identification or detection. Until the past decade, various radioactive labels have been practically the only label type used, particularly in chromatography. This is still the case with electrophoresis. Only in recent years have various non-radioactive labels such as fluorescence and chemiluminescence labels become more widely used. Of radioactive tracers, beta emitters such as tritium (H-3), radiocarbon (C-14) and phosphorus (P-32) have been most used. The increasingly common use of these substances is partly due to the the fact that for beta emitters there has existed a reliable quantitative method of measurement: liquid scintillation counting.

The distance travelled by low-energy beta particles in the sample or scintillation liquid is typically a few dozen micrometers. Therefore, the radioactively labelled sample to be measured has to be placed in direct contact with the scintillator. The scintillator may be a liquid containing organic molecules or a solid substance, or even an inorganic crystalline substance. In the scintillation liquid, the beta particle loses its kinetic energy to the molecules of the solvent, from which the energy is transferred mechanically to the scintillator molecules, which become excited. The excitation of the scintillator molecules is discharged as photons, usually having a wavelength at the blue end of the spectrum. The number of excited scintillator molecules, and at the same time the number of emission photons is proportional to the original energy given up by the beta particle.

On a liquid scintillation counter these emission, or scintillation, photons are usually indicated by means of two photomultiplier tubes, the aim being to guide the scintillation photons to these as efficiently as possible by means of good reflectors. The photomultipliers usually operate in coincidence coupling, in which case the pulse is accepted as real radioactive disintegration only if the pulse is detected almost simultaneously by both photomultiplier tubes. The permitted time difference in such a case is usually less than 20 ns. By means of the coincidence technique, for example, the thermal noise pulses produced spontaneously in the photomultiplier tubes can be eliminated from the calculation result. The total pulse height of both tubes is proportional to the energy of the original beta particle. The pulse height obtained, or the Pulse Height Distribution (PHD) produced by several disintegrations is used in liquid scintillation counting, for example, for identifying an isotope or for distinguishing between the activities of two different isotopes, and in general for analysing the conditions in the environment of the sample.

Traditionally, liquid scintillation counters have been designed to measure sample bottles. The device counts, from one bottle at a time, the sample dissolved in the scintillation liquid in the bottle and the activity that was contained in the sample. The counting time is usually one minute. The volume of the sample bottles is typically either 6 ml or 20 ml. The sample bottles are places in plastic racks. A transfer mechanism rotates the racks under a sample chamber so that the sample changer can take each bottle in turn to be measured.

Instead of separate sample bottles, extruded multiwell sample plates made of plastic are much used in biomedical laboratories. A multiwell sample plate typically has 96 wells in an 8 x 12 matrix. A new type of multidetector liquid scintillation counter has been developed for such sample plates, as disclosed in US patent no. 5,061,853 (Lehtinen et al). Also in this multidetector device, each detector operates two photomultiplier tubes which are in coincidence coupling. The tubes are placed opposite each other so that one photomultiplier tube is above the sample well and the other below it.

In this connection, detector refers to the type of detector which comprises photomultiplier tubes on opposite sides of the sample and in coincidence coupling. More generally, a -detector is, however, any - even single - photomultiplier tube, image detector or the like, as is disclosed in the description of the invention below.

US patent no. 5,198,670 (Van Gauter et al) discloses a liquid scintillation counter which uses only one photomultiplier tube per detector. This counter is also manufactured commercially. In this device the sample pulses are separated from noise pulses by observing the delayed pulses following the actual main pulse.

Since photons are also produced in the chemiluminescence phenomenon, liquid scintillation counters can also be used to count pulses originating from chemiluminescence. These pulses are, however, by nature single photon pulses, and thus in detecting them the coincidence condition must be switched off and only one photomultiplier tube used. If the device comprises separate counters for each photomultiplier tube, it is obviously recommendable to count the same sample with both tubes as this gives a better signal-noise ratio than using a single photomultiplier tube for the same measuring period.

Liquid scintillation counters are also used to measure samples where, for example, labelled cells or parts of cells are filtered onto filter materials. Traditionally, such samples have been measured by means of a normal liquid scintillation counter, either by removing the samples from the filter or by cutting the samples off with their filter papers and measuring them in the usual manner with scintillation liquid in bottles. A method and device for measuring such samples directly from plate are disclosed in GB patent no. 1586966 (Warner et al). In the method described, the filter paper with the sample is enclosed in a bag together with scintillation liquid. The bags can be easily measured by a measuring device built for the purpose, thus saving much work and measuring materials.

However, the bag measuring method described above has certain clear shortcomings. This is why Meltilex (a trademark of Wallac Oy) has been developed - a scintillator that can be melted with heat - and which, when molten, wets the filter paper and on cooling solidifies in the pores and gaps between the filter paper and the sample, thus acting like scintillation liquid. The method and the material used are disclosed in US patent no. 5,198,364 (Oikari and Yrjönen) and FI patent no. 86341 (Suontausta and Oikari). Sample plates made according to the Meltilex method are particularly well suited for measurement by the method and device which are the object of the present invention.

All the above-mentioned devices measure light pulses in certain predetermined positions and in an area of a certain size, and thus it must be known beforehand where the sample to be measured is located. However, in biochemistry and biomedicine there are several determination methods, as mentioned above, where the exact position of the sample is not known in advance. The information obtained on the position of the labelled sample is essential to these methods. This applies particularly, for example, to DNA analysis. The sample plate can, of course, be measured by means of one or more detectors through a small opening, point by point, and the image of the whole sample plate can then be obtained by combining the measured points. This type of unidimensional device, the Scintillation Strip Scanner (SSS), is described in the article: [F. L. Snyder: A review of instrumentation and procedures for ¹⁴C and ³H radioassay by thin-layer and gas-liquid chromatography, Isotopes and Radiation Technology, 6; 381-400 (1969)]. Even if there were several detectors, such a method of measurement is, however, extremely slow, because a measurement time of one minute may be required for a single point to achieve sufficient sensitivity. If the area to be measured at one time was, for example, 1 mm² - which would in fact be too large for most applications - and the size of the sample plate was, for example, 200 mm x 200 mm, then the total measurement time required using a single-detector device would be about one month, when each point is measured for one minute.

X-ray film, which is directly affected by beta particles, has generally been used for measuring all samples of this type. This type of an autoradiographic method is still in use because it gives good resolution and is also extremely sensitive, provided that the exposure time is sufficiently long. The disadvantage of this method is in fact the sufficiently long exposure time and additionally, for example, the narrow dynamic range of the film and poor quantitativity. In the same way as in autoradiography, x-ray film is currently also used on the chemiluminescence labels which have become commonly used in electrophoresis samples and hybridisations. In this case the clear advantage is that exposure times are considerably shorter.

There are in addition various types of gas counters in use, which are based on multiwire proportional counters. With these it is, however, difficult to obtain the required resolution in all applications. In addition, gas detectors only function with tracers based on ionising radiation.

The remaining solution to the problem is to use various sensitive electronic image detectors, because they can be used to image both chemiluminescent light and scintillation light. The sensitive image detectors usable in the applications of the present invention are based on the image intensifier. It is used either as an intensifier in front of a conventional electronic image detector, which may e.g. be a semiconductor or vacuum tube detector, or alone, as a position-sensitive photomultiplier tube. The extremely sensitive so-called cooled CCD camera (Cooled Charge Coupled Device) cannot be used in these applications because it cannot be used for single photon imaging. Even with the best ones, a charge of about ten photoelectrons is required to obtain a detectable signal.

The image intensifier is a vacuum tube, at one end of which, on the inner surface, is an electron-emitting photocathode of the same type as in the photomultiplier tubes. On the inner surface of the other end of the vacuum tube is a screen coated with inorganic luminescent powder (inorganic phosphor powder), onto which screen the electrons detached from the photocathode are accelerated by means of an electric field. In colliding with the luminescent powder the electrons produce scintillation. One or more microchannel plates are often incorporated inside the tube to increase intensification. A microchannel plate consists of small channels having a diameter of e.g. 12 µm, each of the channels functioning like the dynode chain of the photomultiplier.

Image detectors capable of single photon imaging or photon counting imaging - an application of which is the object of the present invention - are divided into A) integrating, and B) non-integrating, or real-time image detectors. Detectors of the latter type are described in the article: [Tsuchiya Y., Inuzuka E., Kurono T., and Hosoda M.: Photon counting imaging and its application, Adv. Electron. Electron Phys. 64A; 21-31 (1985)]. Both categories comprise several sub-types. In this connection, only the operation of the most used type in each category with respect to the invention will be considered more closely, although all photon counting image detectors can be used in connection with the invention. A detector of this type has been utilised in a solution disclosed in US patent no. 4,704,522: Two-dimensional weak-light emitted light measuring device (Hirai, N. and Watanabe M.). The image detectors used in this invention differ from photon counting image detectors in that in addition to single photon events, multi-photon events are also imaged and their pulse height distribution is measured. The image detectors used here according to the invention may be called pulse counting image detectors.

### A) INTEGRATING PHOTON COUNTING IMAGE DETECTOR

The most common of the integrating photon counting image detectors is the so-called intensified CCD or the Intensified Charge Coupled Device (I-CCD), in which a highly intensified image intensifier is connected in front of a CCD image sensor. The connection is carried out either by means of a fiberoptic component or by lens optics. Thus, the flash caused by a single detected photon on the output surface of the image intensifier is clearly distinguishable from the noise background in the image field and these points can be counted in each image field. Since in a normal video frequency signal 50 image fields are taken per second and each image field comprises, e.g. 110 000 pixels, in the known method the possible photon points are searched in real time through rapid upper and lower limit comparison. However, in photon counting imaging the position and height of the pulse are not determined on the basis of image analysis, as is done in the present invention.

The disadvantage of integrating photon counting image detectors in connection with the present invention is that the exact time of input of single photons cannot be determined. Only the time interval during which the photon has arrived is known. In order to be able to apply coincidence counting in connection with this type of image detector, the image frequency has to be increased so much - for example to 1000 image fields per second - that probably only one signal or background pulse will hit a single image field. In this case the coincidence tube should also detect only one pulse during the same time interval in order for the said image field to be acceptable. Another way of using a coincidence tube with an integrating camera - with long integrating times - is to compare the number of pulses detected by the coincidence tube and their pulse height distribution with the number of pulses detected by the image detector and their pulse height distribution. By means of the comparison at least some of the non-sample pulses can be eliminated. The integration time of a single image field can be further shortened by using the image intensifier as a fast electronic shutter.

Furthermore, the pulse given by the coincidence tube or the timing pulse obtained from the image intensifier itself can be used to control the image intensifier so that the image intensifier is switched off and the image read as soon as one or other of the tubes has detected one pulse. In this way, real coincidence counting can also be carried out by means of integrating image detectors. The disadvantage of this method is, however, that effective measuring time often remains short. If, however, the activity of the sample is very low and the noise pulse frequency of the photomultiplier tube is very low, the method is practicable.

### B) NON-INTEGRATING OR REAL-TIME PHOTON COUNTING IMAGE DETECTOR

A non-integrating or real-time photon counting image detector functions like a position-sensitive photomultiplier tube. It, too, is based on an image intensifier and a microchannel plate, but the intensified signal is not converted into light. Instead, the signal is read directly by means of a resistive anode, from the charge distribution of whose various electrodes is calculated the position of the signal, the total charge giving the pulse height. This type of detector is also called a RANICON (Resistive Anode Image Converter). Its principle is disclosed in the publication: [Lampton, N., and Paresce F.,: The ranicon. A resistive anode image converter, Rev. Sci. Instrum. 45; 1098 (1974)]. In the ranicon image detector, the exact time of input, position and pulse height can be added to each pulse separately, thus making its use in coincidence counting similar to that of a photomultiplier tube. The timing pulse for the coincidence electronics is not, however, taken from the anode, because in it the rise time of the pulse is too slow, but instead from the microchannel amplifier plates. The principle is disclosed in the publications: [Charbonneau, S., Allard, L.B., Young, Jeff F., Dyck, G., Kyle, B.J.: Two-dimensional time-resolved imaging with 100-ps resolution using a resistive anode photomultiplier tube, Rev. Sci. Instrum. 63; 5315-5319, (1992)] and [Gao, R.S., Gibner, P.S., Newman, J.H., Smith, K.A. and Stebbings, R.F.: Absolute and angular efficiencies of a microchannel plate position-sensitive detector, Rev. Sci. Instrum 55;1756 (1984)].

A photon counting image detector of the above type and the opportunity it affords for pulse height analysis have been applied, for example, in examining thin cuts of rat carcinomas. The tracers used included monoenergetically radiating beta emitters ⁶⁷Ga (83 keV) and ^{113m}In (360 keV), the pulse height of which was compared with the pulse height of noise pulses. This is presented in the article: [Ljunggren, K. and Strand, S-E: Beta camera for static and dynamic imaging of charged-particle emitting radionuclides in biological samples, J. Nucl. Med. 31 2058 (1990)]. The camera used in it is a so-called scintillation camera, where the plastic scintillator or scintillation plastic was attached directly to the fiberoptic faceplate of the detector. A prototype of a position-sensitive x-ray spectrometer has been presented already earlier in the article: [Yin, Lo I. and Trombka, Jacob I.: New position-sensitive hard x-ray spectrometer, Rev. Sci. Instrum. 51; 844-5 (1980)], which specifically claims that this device was the first microchannel device which was also energy-sensitive, that is, capable of pulse height analysis. The device did not comprise an actual image sensor, but it showed that an image intensifier could be used for pulse height analysis.

A photon counting camera, that is, a photon counting image detector together with lens optics, can obviously also be used to image plate-like samples. The use of optics has the additional advantage that the whole sample plate, e.g. 200 mm x 200 mm, can be imaged at one time. For example, Hamamatsu has presented this type of product at least as early as in 1987. The collection geometry of lens optics is, however, so poor that even if the label were radiocarbon, which produces an average of over 100 optical photons per one beta particle in a scintillator, not nearly all beta disintegrations are even detected. In liquid scintillation counting, on the other hand, almost all disintegrations are detected. The significant characteristic of liquid scintillation counting - the possibility of double-labelling, for example, with tritium and carbon - does not function at all with a camera imaging by lens optics. The probability that more than one photon would hit the camera simultaneously is very low, even when using carbon.

For example, the article [Joss, U.R. and Schleinkofer, L: Detection of radioactivity from microtiterplates in situ using a photon counting camera, J. Biochem. Biophys. Methods, 1990] discloses a method in which researchers imaged tritium on a microtiterplate with solid Xtalscint scintillator. They obtained a counting efficiency of only 3% for tritium, whereas in liquid scintillation this figure is about 70%. In other words, lens imaging yields only one pulse to the camera per thirty disintegrations, whereas in normal liquid scintillation counting 2/3 of all disintegrations are detected and from most of these several photons per disintegration are obtained. This shows that the pulse height analysis of low-energy beta emitters can be carried out only if the optical collection geometry is sufficiently good. As will be shown below, the only way of achieving sufficiently good collection geometry is to use contact imaging.

Image intensifiers as such have been used as intensifiers in autoradiography. In the article [V. Brisgunov, B. Rebentish, I. Gordon and V. Debabov: Application of image intensifier for autoradiography of polyacrylamide gels, Anal. Biochem. 66, 100-103 (1975)], the researchers used an image intensifier tube coated with ZnS luminescent material, which was brought into contact with molecules labelled with radiocarbon. The intensified image was registered from the image intensifier on conventional photographic film, which was in contact with the output window of the image intensifier. According to the researchers, exposure time was reduced to one thousandth part. In the article [G.T. Reynolds: Scintillomicroscope for radioactive tracer definition, Rev. Sci. Instrum; 298-302 (1968)], it had already earlier been shown that when the lens system was removed from in front of the image intensifier, and the sample coated with luminescent powder was pressed into direct contact with the fiberoptic window of the image intensifier, the optical collection geometry rose from the value 0.005 to the value 0.5, that is, a hundredfold.

US patent no. 4,389,670 (J.B. Davidson and A.L. Case) describes an electronic method for autofluorography. Autofluorography is generally used instead of autoradiography with low-energy beta emitters. In autofluorography, a scintillator is mixed with electrophoresis gel and the film exposes from light instead of directly from the beta particles as in autoradiography.

However, in the above applications, image intensifiers have been used only as intensifiers and the pulse-like nature of radioactive disintegration has not been utilised. Neither does the method described in the said US patent no. 4,389,670 provide a possibility for the energy separation of different isotopes, which is generally used specifically in liquid scintillation counting. Neither does the use of an image intensifier as a mere intensifier provide an opportunity for discriminating thermal pulses or other non-sample pulses. In fact one of the advantages of pulse counting is that the pulse counting statistics are known and can be used immediately to assess the reliability of error limits and measurement.

### DESCRIPTION OF THE INVENTION

The object of the present invention is a measuring method and device for counting luminescence or scintillation light pulses produced on a plane-like sample plate or sample which is spread on a plane-like support plate.

It is characteristic of the method relating to the invention that, in addition to the number and intensity of the light pulses, also the position of each light pulse is determined, and that an image detector is used so that the light-sensitive surface of the image detector and the sample are brought as close to each other as possible.

It is characteristic of the device relating to the invention that it comprises
- a support plate or the like, on which the sample is placed in the measuring situation,
- a pulse counting device, the detector of which is a position-sensitive detector,
- and equipment for bringing the sample and the detector as close to each other as possible.

Since light pulses are produced by the labels used in certain biochemical research methods, where the position of the labels or labelled molecules is not known in advance, according to this invention the light pulses are counted so that their position and pulse height are also determined.

As good collection geometry is important for measuring the intensity of the pulses, an image detector is used which is, according to this invention, brought as close to the sample as possible.

Because false pulses not originating from the sample are also produced in the position-sensitive detectors used in this invention, according to the invention, a second detector which is not position-sensitive may be used to monitor the measuring information from the actual detector.

### LIST OF DRAWING FIGURES

The method and device relating to the invention are described in greater detail in the following, with reference to the appended drawings in which
- Figure 1: shows diagrammatically a perspective view of the measuring equipment relating to the invention.
- Figure 2: shows a diagrammatic side view of the measuring equipment.
- Figure 3: shows the sample plate with the protective film when-placed on the support plate.
- Figure 4: shows a diagrammatic side view of the measuring equipment which comprises an integrating, position-sensitive detector, ICCD.
- Figure 5: shows, as a perspective view, the image field formed by single photon events with the integrating, position-sensitive detector, ICCD.
- Figure 6: shows the image field formed by the single photon events of figure 5 as seen from above.
- Figure 7: shows diagrammatically multiphoton measurement by means of an integrating, position-sensitive detector, ICCD.
- Figure 8: shows, as a perspective view, the image field formed by multiphoton events with the integrating, position-sensitive detector, ICCD.
- Figure 9: shows the image field formed by the multiphoton events of figure 8 as seen from above.
- Figure 10: shows a diagrammatic side view of a lens-coupled, integrating image detector, ICCD.
- Figure 11: shows a diagrammatic side view of a measuring head where an integrating image detector ICCD and a conventional photomultiplier tube are in coincidence coupling.
- Figure 12: shows a diagrammatic side view of a RANICON-type image detector in coincidence coupling.
- Figure 13: shows a diagrammatic side view of two RANICON-type image detectors in coincidence coupling.

### DETAILED DESCRIPTION OF THE DRAWINGS

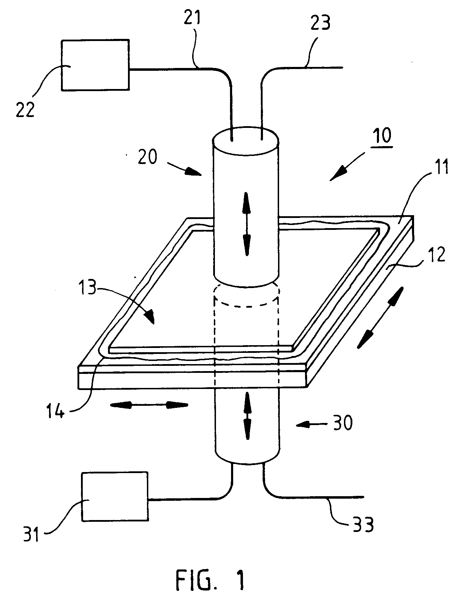

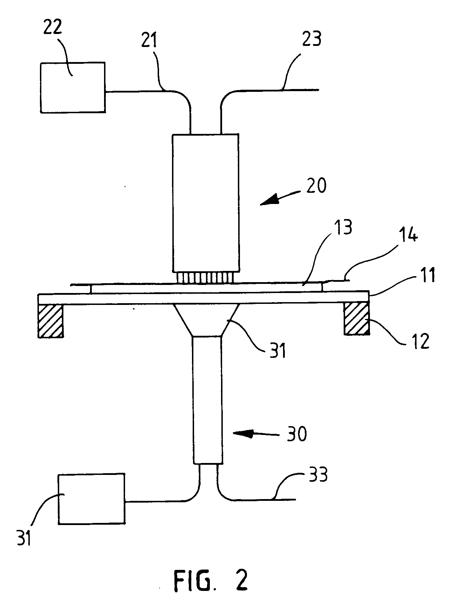

Figures 1 and 2 show diagrammatically the measuring unit 10 of the measuring device relating to the invention, the said unit comprising a movable support plate 11 and its frame 12. Over the sample plate 13 there is a thin protective film 14, which is e.g. a 3 µm thick plastic film, such as a polyester film. Above the support plate 11 is a pulse counting image detector 20, connected by means of a cable 21 to a power source 22 and by means of another cable 23 to the analyser electronics part, which is not shown in figures 1 and 2. The figures show the cables only in principle, so that in actual fact one cable may comprise several different cables. The position-sensitive detector 20 above the sample plate 13 also incorporates a lifting and lowering mechanism, which is not shown in the figures.

Below the support plate 11 is a second detector 30 counting light pulses in a non-position-sensitive manner, the said detector being a conventional photomultiplier tube. The power source of the detector 30 is marked with reference number 31. The detector 30 incorporates a mechanical reflector 32, which limits the area detected by detector 30 to the same as that detected by detector 20 above the sample plate 13. It also incorporates a signal cable 33.

The support plate 11 shown in figures 1 and 2 may, for example, be 220 mm x 220 mm in size and, for example, 1 mm thick. It may be plastic, glass, metal or scintillation plastic. It may also be transparent, white or reflecting like a mirror. The support plate 11 is fastened, in such a way that it can be replaced, to the frame 12 by means of which the support plate 11 is moved with respect to the detector 20 so that all the points of the sample plate 13 placed on top of the support plate 11 can be measured.

The pulse counting image detector 20 may, for example, be an image intensifier tube optically connected to a matrix detector. The matrix detector may, for example, be a CCD detector, that is, a Charge Couple Device, which in turn is connected to an analyser. It may also be an image intensifier tube equipped with a resistive anode, or some other type of image detector capable of pulse counting.

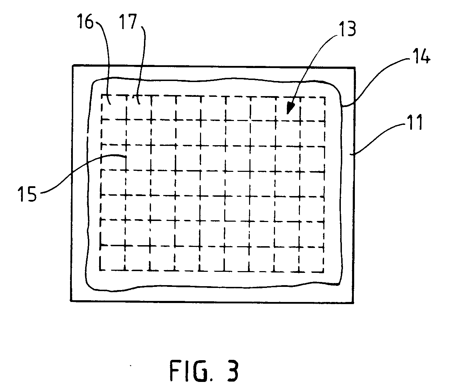

Figure 3 shows the sample plate 13 - which may also be a sample simply spread on the support plate 11 - on top of the support plate 11. The sample 13 or sample plate is covered with a thin protective film 14, in order to protect the detector 20 from becoming soiled during measurement.

On the sample plate 13 are drawn broken lines representing dividing lines 15 perpendicular to each other, which serve to depict the principle of the measuring procedure. Since the image detector is capable of counting light pulses only in an area of, for example, 20 mm x 18 mm at one time without the detector moving, the detector has to be moved during measurement. Therefore, measurement is carried out in such a way that, when one position 16 has been measured, the detector is lifted off the protective film 14, and the support plate 11 with the sample 13 is moved. The new measuring position 17 is brought under the detector and the detector is lowered into contact with the protective film 14. The detector must be brought so close that the air gaps on either side of the protective film 14 remain as small as possible.

The new measuring position 17 may overlap partly with the previous measuring position 16. The whole sample plate 13 is covered in this manner and the results of the measurement are combined into a single image on the computer, taking into account the overlapping. If the size of the sample plate 13 is, for example, 200 mm x 200 mm and the said detector 20 is used for measurement, there must be at least 11 x 12, that is 132 different measuring positions. If one measuring position is measured, for example, for one minute, the total measuring time will exceed two hours. This does not, however, differ essentially from the measuring times of devices based, for example, on proportional detectors.

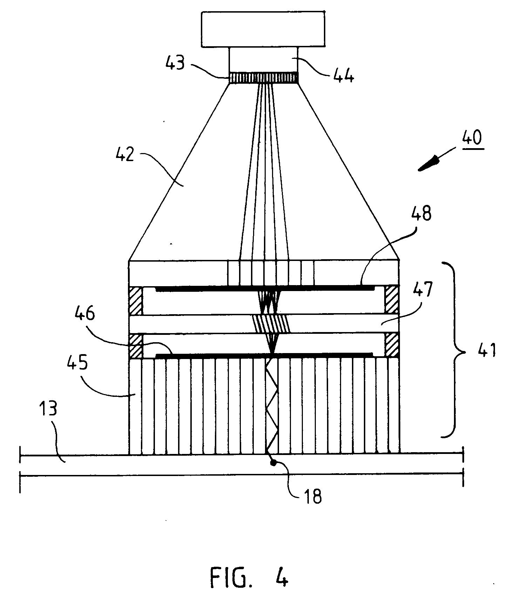

Figure 4 shows as a cross-sectional view an example of an integrating position-sensitive detector 40, which comprises an image intensifier 41 and a fiberoptic cone 42 optically connected to it, to which cone is optically connected a semiconductor image detector, or CCD 44, equipped with a fiberoptic faceplate 43.

A light pulse generated on the sample plate 13 as a result of a chemical reaction such as chemiluminescence, contains only one photon 18 which, with a certain probability, travels upwards and through the window of the fiberoptic faceplate 45, to the photocathode 46 of the image intensifier tube. On the photocathode 46 the photon detaches an electron from the photocathode material with a known probability. The electron is drawn by means of an electric field into a channel of the so-called microchannel plate 47 inside the image intensifier 41.

The microchannel plates 47 are usually made in such a way that the channels are not quite perpendicular to the surface of the plate, which means that an electron rushing perpendicularly to the plate collides with the channel wall. The collision detaches more electrons from the walls of the channel and this continues further over the entire length of the channel. Intensification thus takes place in the plate and may, for example, be a thousandfold.

The electrons emitting from the channel of the microchannel plate 47 are further accelerated by means of an electric field towards the luminescent powder layer 48 (screen), where the kinetic energy of the electrons again is converted into light. By using more than one microchannel plate 47 inside the image intensifier 41, for example, a millionfold intensification can be achieved in the image intensifier. Typically, one photon generates a flashpoint with a diameter of about 50 µm on the output side of the image intensifier 41.

Since in the example shown in figure 4, the area of the CCD 44 is smaller than the area of the output surface, a demagnifying fiberoptic taper 42 is used in guiding the light from the image intensifier to the CCD sensor. A typical demagnifying ratio is 25:11.

In a typical CCD sensor 44, for example, a Thomson 7883, the size of one pixel is 23 µm x 23 µm, which means that the intensified and demagnified image of one photon is of exactly the same order as the pixel of the sensor. When the CCD sensor 44 is used at normal video frequency, light is collected in all pixels for 20 ms. Even if the image sensor 44 were kept in complete darkness, already during 20 ms a charge amount is collected due to thermal noise in the pixel amounting, for example, to 100 electrons.

Even if the number of photons of the light pulse emitting from the image intensifier 41 were divided between several pixels, the number of photons coming at one time is, however, so great that these pixels can easily be separated from the ones containing only charges produced by thermal noise. Typically, in digital image handling, the charges of the image sensor are digitised and then stored in a computer's memory. In a known method, rapid analogical comparison is used to examine whether a photon has hit the area represented by the pixel on the front surface of the image intensifier 41 or not, and only either 1 or 0 is stored in the computer's memory.

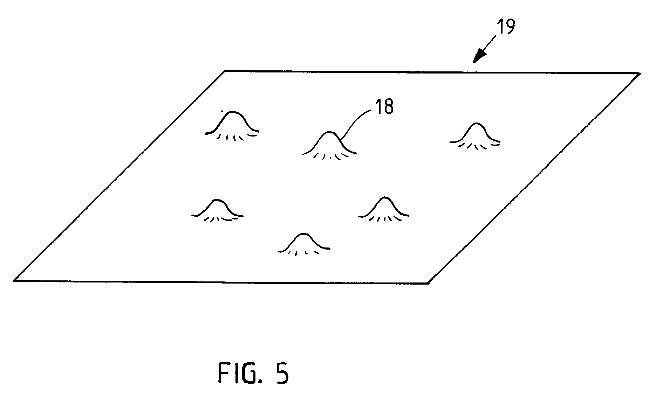

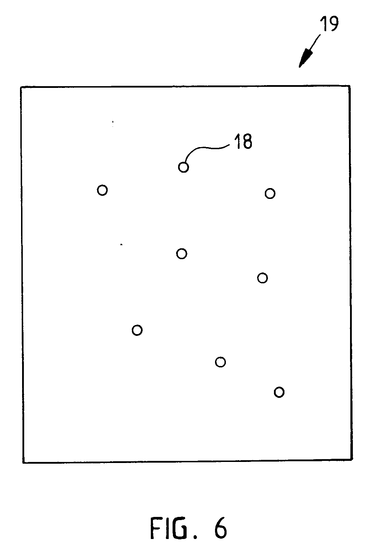

Figures 5 and 6 show an image field 19 produced by single photons 18. In single photon counting the image intensifier is normally used in such a way that the intensification is allowed to become saturated, in which case all the photon pulses are of almost the same height. From this type of image the number and position of the photons can be reliably analysed, using known image analysis tools. The disadvantage of this type of position-sensitive single photon counting method, or single photon imaging, is, however, the fact that automatic counting becomes difficult or does not function if there is an excessive amount of the original photons, in which case they will overlap with a certain probability.

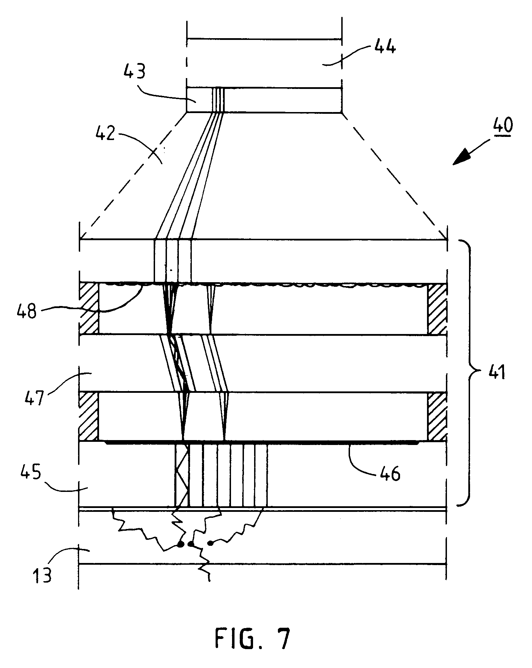

Figure 7 shows multiphoton measurement, that is, the production of a signal when a light pulse consists of several simultaneous photons. The detector 40 comprises an image intensifier 41 in which a light pulse emitting from the sample plate 13 proceeds via a fiberoptic faceplate 45 to a microchannel plate 47 and from there further to the luminescent powder layer 48. Through the fiberoptic cone 42 the light proceeds through the fiberoptic faceplate 43 to a semiconductor image sensor 44.

Multiphoton pulses are typically produced in scintillators as a result of radioactive disintegration. When radioactive carbon - which is used widely as a tracer - disintegrates, it produces simultaneously an average of over a hundred photons which are produced locally within a space of a few micrometers.

The scintillator used in connection with plate-like samples is often the meltable scintillator "Meltilex", which is a trademark of Wallac Oy, and also extremely well suited for the above measurements. The some one hundred photons produced go off from the beta particle's course at random in different directions.

As the Meltilex scintillator is translucent, the course of single photons is not rectilinear, but a traverse line. Therefore, the photons emit from the scintillation plate from an area having a radius of the same order as the distance of the beta particle from the surface of the scintillation plate. For this reason as thin a scintillator layer as possible should be used in imaging applications.

Transparent scintillators can also be used in imaging applications, but the resolution is not as good. Of the some one hundred photons produced in the disintegration of radioactive carbon, fewer than half reach the photocathode of the position-sensitive detector through the conductor channels of the fiberoptic window, producing an average of somewhat less than ten photoelectrons, which become intensified in the image intensifier in the manner described above, as do single electrons.

As the channels of the microchannel plate are usually small, e.g. 6-12 µm, photoelectrons originating from the same disintegration use diffenent channels and not much saturation takes place in the channels. However, at the output of the image intensifier the images of single photons produced during the same radioactive disintegration are mixed and overlap. If a coincidence tube is not used, the support plate may be very reflecting, either mirror-like or diffuse. In this way a greater pulse height is achieved, or lower intensification can be used in the image intensifier.

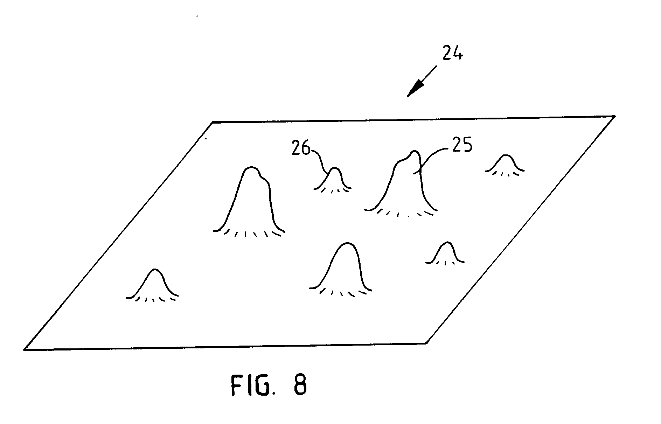

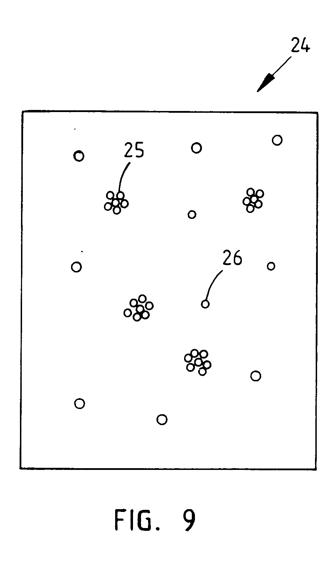

Figures 8 and 9 show the image field 24 of multiphoton events which differs from the image field 19 of single photons in figures 5 and 6 in that the peaks 25 are clearly higher. Also the height distribution is wider because the distribution of the numbers of photons from the original multiphoton events was wide. The distribution of the number of photons stems from the distribution of the energy of the beta electrons.

Also in figures 8 and 9, the position of each multiphoton event 25 and the total intensity produced by the photons relating to a single disintegration in the image field 24 can easily be determined by means of normal image analysis methods. Furthermore, a corresponding pulse height spectrum can be made of them and used for energy separation, and further for the position-related distinction of different isotopes. If a sample contains, for example, a mixture of C-14-labelled and P-32-labelled molecules, two images can be made of the sample on the basis of pulse heights: one representing the positioning of C-14-labelled molecules in the sample and the other the positioning of the P-32-labelled molecules in the sample. The lower pulses 26 depict noise pulses.

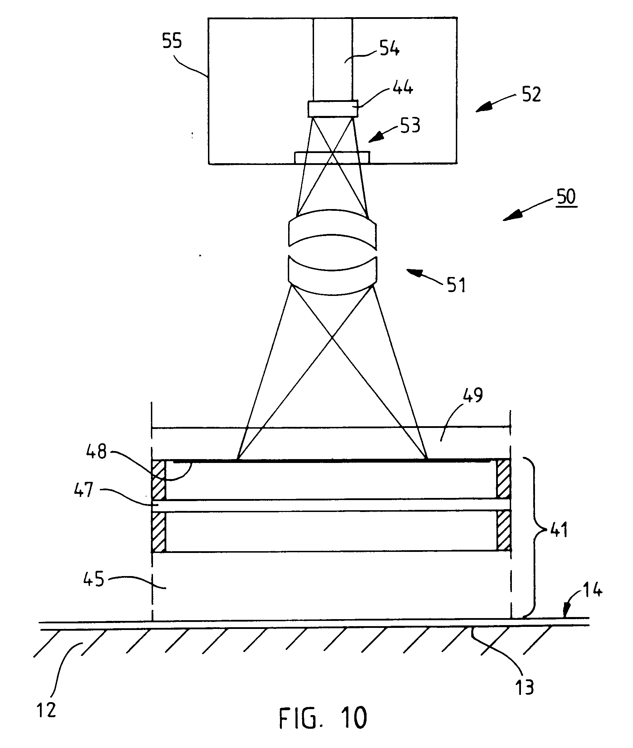

Figure 10 shows a diagrammatic side view of a lens-coupled integrating image detector, that is the ICCD 50, known as such. The lens-coupled CCD detector (Charge Coupled Device) makes possible the use of a cooled CCD. Instead of a fiberoptic cone, the device 50 comprises an image intensifier 41 and an image sensor 44 connected with each other by means of lens optics 51, in which case the output window 49 of the image intensifier may be of ordinary glass. When using lens optics 51, clearly more light is lost than with fiberoptics. The mechanical arrangement takes more space, but with lens optics 51 a vacuum-insulated, cooled camera 52 can be used. This type of camera 52, on the other hand, makes possible a longer image field integration period and also slower reading of pixels, which in turn affects the noise arising from analog-to-digital conversion.

The image intensifier 41 shown in figure 10 comprises a conventional non-fiberoptic output window 49, an objective lens 51 - for which is selected as brilliant a lens system as possible - and a cooled camera 52, the most important parts of which are a vacuum window 53, an image sensor 44, a cooling element 54, and a tightly sealed housing 55. The difference compared to the known method of use is that the fiberoptic faceplate 45 of the image intensifier 41 is in contact with the sample plate 13.

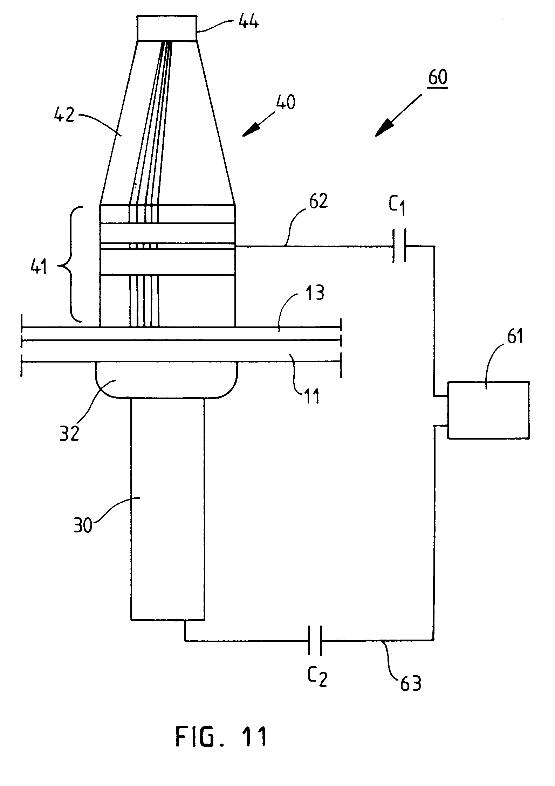

Figure 11 shows a diagrammatic side view of the measuring head 60 of two detectors, where the upper detector 40 is an integrating pulse counting image detector ICCD 44, and the lower detector 30 is an ordinary photomultiplier tube, here called the coincidence tube, because the detectors 40 and 30 are coupled in coincidence. The photomultiplier tube 30 is equipped with a reflector 32 in such a way that it will collect the photons from the same area as the upper detector 40.

Both detectors 40 and 30 are connected to each other by means of timing pulse conductors 62 and 63 and capacitors C1 and C2, as well as coincidence circuit 61. The coincidence circuit 61 may also contain pulse-shaping circuits and logic gates. In the measuring arrangement of figure 11, the support plate 11 must be transparent and as thin as possible in order for the lower detector 30 to detect as little light as possible from outside the measurement area.

Real coincidence counting with an integrating image detector can be carried out, for example, as follows. The image is integrated until the output of the coincidence circuit indicates that the image detector alone or both detectors at the same time have detected a pulse. Integration is stopped by switching the intensification of the image intensifier off, the image is read and, if necessary, analysed. If the pulse was detected only by means of the image detector, it is a noise pulse which is not searched or stored, but reading the image detector will eliminate it ready for the following measurement. If both tubes have detected the pulse at the same time or within a very short, so-called coincidence period, then it is most probably a real sample pulse, the position and pulse height of which are searched in the image field.

Another method for eliminating noise pulses is to apply such a short integration time to the image that it is unlikely that more than one sample or noise pulse hits it. In this case separate coincidence electronics are not needed at all. If the image detector contains only one pulse and also the coincidence tube has detected only one pulse, then this is with a certain probability a sample pulse. If the detectors have detected different numbers of pulses, the image field must be rejected.

A third method, which is not actual coincidence technique, is to utilise the second detector with long integration times only to compare and control the results.

The image intensifier can also be utilised as a switch so that the intensifier is switched off while the image is read. In this way no pulses that would be in an incorrect position can enter the image during readout.

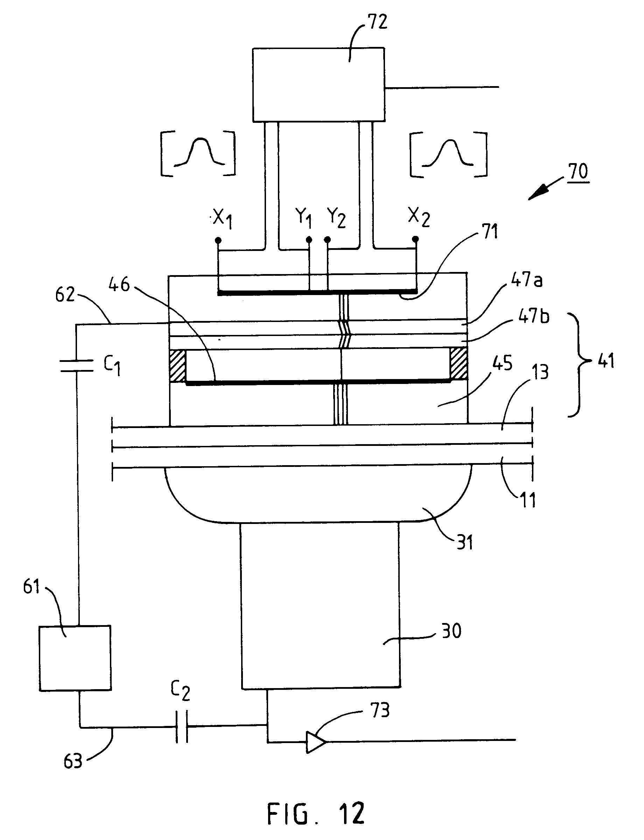

Figure 12 shows diagrammatically a multiphoton event in the measuring equipment, incorporating a RANICON-type image detector 70 (Resistive Anode Image Converter) and a photomultiplier tube 30 in coincidence coupling. The image intensifier 41 of the Ranicon detector 70 comprises a fiberoptic faceplate 45, two microchannel plates 47a and 47b in so-called chevron coupling, a resistive anode 71, a summing amplifier 72, from which the data is lead to the analyser, not shown in the figure. The photomultiplier 30 is connected to the image intensifier 41 by means of the timing pulse conductors 62 and 63 and capacitors C1 and C2, and the coincidence circuit 61, and the data from the photomultiplier are transmitted via the amplifier 73 to the analyser, not shown in the figure.

The radioactive disintegration taking place on the sample plate produces dozens or hundreds of simultaneous photons, depending on the energy of the original beta particle. About half of the photons migrate to the image detector and most of the remainder of photons to the coincidence tube 30. From the coincidence tube anode a rapid timing pulse is formed in the coincidence circuit 61 and the actual signal pulse is transmitted via the amplifier 73 to the analyser electronics.

The photons which migrated to the image detector are guided - while maintaining their position information - through the fiberoptic window 45 to the photocathode 46, where on average, for example, every fourth photon produces a photoelectron. The photoelectrons are accelerated by means of an electric field into a microchannel plate amplifier 47, at least two of which, 47a and 47b, are needed, which are often in so-called chevron coupling. The separate photoelectrons probably hit different amplifier channels and thus all become amplified, like a single photoelectron, which means that the charge forming on the anode 71 is linearly proportional to the original energy of the beta particle.

In the present case, when radioactive disintegrations are counted, the intensification of the detector 70 need not be as high as in single photon counting, as there are more simultaneous photoelectrons. Thus the sufficient total amount of charge will be obtained even with lower intensification. In the resistive anode 71, the total charge drifts to different electrodes x₁, x₄, y₁, y₄, so that from the ratios of the amounts of charge can be calculated, in a known manner, the centre of gravity of the charge distribution. In this way, the detector will automatically calculate the position of the original beta disintegration, even though the optical photons are scattered over a relatively large area in the scintillator. This requires, however, that a sufficient number of photoelectrons have been produced in order for the centre of gravity of their positions to be reliable. The total charge amount is transmitted via the summing amplifier 72 to the analyser for pulse height analysis.

Coincidence coupling is used in the equipment of figure 12 in the same way as in a normal liquid scintillation counter, that is, the pulse is accepted only if both detectors detect it. In this case it is probably a real sample pulse.

In the analyser the pulse heights from both detectors can, in addition, be summed up, thus eliminating partly the surface effect possibly seen in pulse heights. All the methods of analysis used in liquid scintillation counting can also be applied to pulse height analysis by detectors.

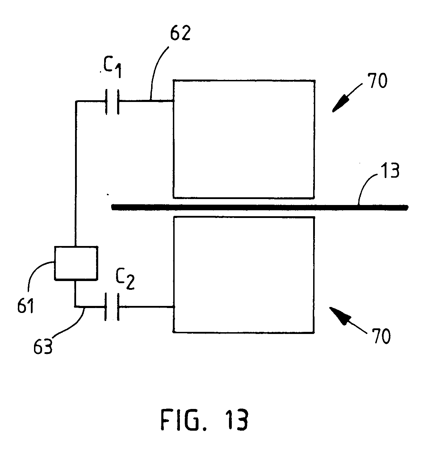

Figure 13 shows a diagrammatic side view of a modification of the equipment of figure 12 with two RANICON-type image detectors in coincidence coupling. Thus both detectors give information on the position of the pulse.

It is obvious to a person skilled in the art that the different embodiments of the invention may vary within the scope of the claims presented below.

## Claims

1. A method for counting the number and measuring the intensity of light pulses produced by the chemiluminescence labels or radioisotopes used in biochemical applications in a scintillator, in plane-like samples (13),
**characterized** in that in addition to the number and intensity of the light pulses, also the position of each light pulse is determined, and that an image detector (20) is used so that the light-sensitive surface of the image detector and the sample (13) are brought as close to each other as possible.

2. A method as claimed in claim 1,
**characterized** in that the faceplate of the image detector (20), which may be an ordinary glass plate or a fiberoptic glass plate (45), is brought into contact with the protective film (14) of the sample (13).

3. A method as claimed in claim 1 or 2,
**characterized** in that the whole sample plate (13) is measured in parts which are combined into a single image, for example, with a computer so that the plate-like samples are analysed piece by piece like a mosaic.

4. A method as claimed in claim 1, 2 or 3,
**characterized** in that the measuring information given by the image detector (20) on the number, intensity and input time of the pulses is controlled by means of a second detector (30) so that opposite the image detector, on the opposite side of the sample, a detector is used for coincidence detection or otherwise for ensuring the correct functioning of the image detector.

5. A measuring device (10), such as a chemiluminescence or liquid scintillation counter for plane-like samples,
**characterized** in that it comprises
- a support plate (11) or the like, on which the sample (13) is placed in the measuring situation,
- a pulse counting device, the detector (20) of which is a position-sensitive detector,
- and equipment for bringing the sample and the detector as close to each other as possible.

6. A measuring device as claimed in claim 5,
**characterized** in that the measuring device (10) comprises a moving mechanism by means of which the support plate (11) can be moved horizontally with respect to the detector (20), and another mechanism by means of which the detector can be moved vertically into contact with the sample plate for the duration of the measurement and be lifted off it for moving the sample plate.

7. A measuring device as claimed in claim 5 or 6,
**characterized** in that the measuring device (10) comprises a second detector (30) located opposite the first position-sensitive detector (20), on the opposite side of the sample, the said second detector being a conventional photomultiplier tube or a position-sensitive detector, and in coincidence coupling with the first detector to ensure the correct functioning of the first detector.

8. A measuring device as claimed in claim 5, 6 or 7,
**characterized** in that both of the detectors (20, 30) located on opposite sides of the sample (13) are position-sensitive image detectors, which means that by comparing their images, the noise pulses (26) produced in the detectors can be separated from real sample pulses (25).

9. A measuring device as claimed in any of the claims 5 to 8, **characterized** in that the measuring device (10) comprises, opposite each other, two RANICON-type (Resistive Anode Image Converter) image detectors (70) which are coupled in coincidence.

10. A measuring device as claimed in any of the claims 5 to 9, **characterized** in that the faceplate (45) of the detector (40) coming into contact with the sample of the measuring device (10) is fiberoptic.
